# EUROPÄISCHE PATENTSCHRIFT

(11) **EP 4 342 649 B1**
(45) Veröffentlichungstag und Bekanntmachung des Hinweises auf die Patenterteilung: **25.02.2026**
(21) Anmeldenummer: 22196831.6
(22) Anmeldetag: 21.09.2022
(51) Int. Cl.: B29C 44/20, B29C 33/02, B29C 33/04, B29C 44/34, B29C 44/44, B29C 44/58

(54) **VERFAHREN ZUM HERSTELLEN EINES FORMTEILES**
METHOD FOR PRODUCING A MOULDED PART
PROCÉDÉ DE FABRICATION D'UNE PIÈCE MOULÉE

(43) Veröffentlichungstag der Anmeldung: 27.03.2024
(73) Patentinhaber: Knauf Industries Gestion, 68600 Wolfgantzen (FR)
(72) Erfinder: SCHEUER, Simon, 53797 Lohmar (DE)
(74) Vertreter: KBN IP Patentanwälte Partnerschaft mbB

(56) Entgegenhaltungen:
- EP-A1- 1 923 193
- WO-A1-2018/095572
- WO-A1-2019/034269
- DE-A1- 102008 016 883
- DE-A1- 102020 106 725
- US-A- 3 837 769
- US-A- 4 627 946

## Beschreibung

Die Erfindung betrifft ein Verfahren zum Herstellen eines Formteiles aus einem geschäumten Kunststoff in einem von Wänden begrenzten Formhohlraum eines mindestens zweiteiligen öffen- und schließbaren Formwerkzeuges. Ein solches, üblicherweise auch als Partikelschäumverfahren bezeichnetes Verfahren umfasst üblicherweise die Schritte:
a. Schließen des Formwerkzeuges zur Bereitstellung des Formhohlraumes;
b. Einfüllen eines partikelförmigen Granulats des Kunststoffes in den Formhohlraum;
c. Erhitzen des Granulats durch Einbringen von Wasserdampf in den gefüllten Formhohlraum mit einer solchen Temperatur und einem solchen Dampfdruck, dass das Granulat zu einem Formteil verschmolzen wird;
d. Abkühlen des Formteiles in dem Formhohlraum;
e. Öffnen des Formwerkzeuges und Entnehmen des Formteils,
wobei der in den Formhohlraum eingebrachte Wasserdampf durch Dampfkammern geleitet wird, die an der dem Formhohlraum gegenüberliegenden Seite der Wände des Formwerkzeuges angeordnet sind und über die Wände durchsetzende Öffnungen mit dem Formhohlraum kommunizieren.

Zum Stand der Technik kann beispielsweise auf die EP 0 259 597 A2 und die EP 2 227 366 B1 verwiesen werden. US 4 627 946 A offenbart ein Verfahren zum Herstellen eines Formteiles aus einem geschäumten Kunststoff.

Zum Erwärmen der Wände des Formhohlraumes und gleichzeitigem oder anschließenden Erhitzen des Granulats wird im Stand der Technik üblicherweise nach dem Schließen des Formwerkzeuges und nach dem Einfüllen des partikelförmigen Granulats Wasserdampf in den Formhohlraum eingebracht, der die Wände auf die gewünschte Temperatur aufheizt und das partikelförmige Granulat im Formhohlraum verschmelzen lässt. Dieser Wasserdampf führt jedoch unerwünschter Weise zur Ausbildung von Kondensat, welches sich an den Wänden des Formhohlraumes absetzt und die Formgebung beeinträchtigt und/oder die Oberflächenqualität des erhaltenen Formteiles negativ beeinflusst. Zudem müssen die Dampfkammern verhältnismäßig voluminös ausgeführt werden, sodass die Formwerkzeuge entsprechend großes Volumen aufweisen, was eine entsprechend großformatige Dimensionierung der gesamten Formmaschine nach sich zieht.

In der EP 2 227 366 B1 wird daher vorgeschlagen, diesen Wasserdampf durch Anlegen eines Unterdrucks aus dem Formhohlraum zu entfernen. Durch diesen zusätzlichen Arbeitsschritt wird jedoch die Taktzeit zum Herstellen eines Formteiles verlängert.

Überdies ist die Bereitstellung großer benötigter Dampfmengen energieintensiv und erfordert große Wassermengen und der aus dem Formhohlraum entfernte Dampf führt außerhalb des Formwerkzeuges zu unerwünscht hohen Feuchtigkeitsmengen.

Aus der EP 2 875 928 A1 und der EP 3 088 153 A1 sind darüber hinaus Formwerkzeuge zum Herstellen von Formteilen im Partikelschäumverfahren bekannt, die aufgrund ihrer Herstellung aus metallischen Werkstoffen in einem additiven Verfahren, zum Beispiel mittels selektivem Laserschweißen, auch feine Hohlstrukturen mit integrierten Kanälen und Öffnungen aufweisen können, wie sie mit herkömmlichen spanabhebenden sowie Gießverfahren nicht herstellbar sind.

Aufgabe der Erfindung ist es, ein Verfahren der eingangs genannten Art vorzuschlagen, welches durch besonders niedrige Takt- oder Zykluszeiten und besonders geringen Energie- und Wasserverbrauch sowie kompakte Abmessungen der eingesetzten Formwerkzeuge die Nachteile des Standes der Technik überwindet.

Zur Lösung der gestellten Aufgabe wird erfindungsgemäß ein Verfahren gemäß den Merkmalen des Patentanspruches 1 vorgeschlagen.

Vorteilhafte Ausgestaltungen und Weiterbildungen der Erfindung sind Gegenstand der abhängigen Ansprüche.

Die erfindungsgemäße Lösung sieht vor, dass innerhalb der Wände des Formwerkzeuges ein Temperiermedium in einem nicht mit den Dampfkammern und dem Formhohlraum kommunizierenden Hohlraum zum Vorwärmen der Wände geführt wird und die Wände des Formwerkzeuges auf eine für das Verschmelzen des Granulats zu dem Formteil geeignete Temperatur vorgewärmt werden. Diese Vorwärmung kann erfindungsgemäß bereits vor dem Schließen des Formwerkzeuges erfolgen. Erfindungsgemäß kann somit bereits vor und während des Schließens des mindestens zweiteiligen Formwerkzeuges und/oder während des Füllvorganges des Formhohlraumes vor der Einbringung des Wasserdampfes die Vorwärmung der Wände initiiert werden, wodurch gegenüber dem Stand der Technik erhebliche Prozesszeit eingespart werden kann. Beim Stand der Technik war es erforderlich, zunächst das vollständige Schließen und Füllen des Formwerkzeuges und die damit einhergehende Ausbildung des Formhohlraumes abzuwarten, bevor aus den Dampfkammern ein Dampfstoß in den Formhohlraum zum Erwärmen abgegeben werden konnte. Dieser führte wiederum zu enormer Ausbildung von Kondensat, welches sich anschließend im Formteil befand und für die bekannten Probleme sorgte.

Die erfindungsgemäß vorgesehenen Hohlräume in den Wänden des Formwerkzeuges, in denen ein Temperiermedium derart geführt werden kann, dass es nicht mit den Dampfkammern und dem Formhohlraum kommuniziert, sind durch Herstellung des Formwerkzeuges in einem additiven Verfahren ausgebildet.

Erfindungsgemäß weist somit das im Rahmen des Verfahrens verwendete Formwerkzeug insgesamt drei unabhängig voneinander temperierte Ebenen auf, nämlich in Übereinstimmung mit dem Stand der Technik einerseits die Dampfkammern und andererseits den Formhohlraum sowie zusätzlich zum Stand der Technik den nicht mit den Dampfkammern und dem Formhohlraum kommunizierenden Hohlraum innerhalb der Wände des Formwerkzeuges als dritte temperierte Ebene.

Als Temperiermedium wird im Rahmen des erfindungsgemäßen Verfahrens insbesondere Wasserdampf verwendet, alternativ kommen jedoch auch andere geeignete Temperiermedium, zum Beispiel Wasser oder Öl oder Abmischungen derselben in Betracht.

Es ist vorgesehen, die Wände auf eine geeignete Temperatur vorzuwärmen, die nach einem Vorschlag der Erfindung etwa 100 bis 200°C beträgt, z.B. bei Verarbeitung von expandiertem Polypropylen (EPP) etwa zwischen 110 °C bis 150 °C, vorzugsweise 140 °C beträgt, wobei die Temperatur frei einstellbar ist und vom Fachmann nach Maßgabe der zu verarbeitenden Kunststoffe ausgewählt wird.

Die erfindungsgemäß vorgeschlagene Vorwärmung der Wände durch das innerhalb der Wände geführte und weder mit dem Formhohlraum noch mit den Dampfkammern kommunizierende Temperiermedium bietet darüber hinaus den Vorteil, dass der Formhohlraum während des Vorwärmens nicht mit Dampf in Kontakt kommt, der insoweit auch nicht als Kondensat ausfallen und aufwendig wieder aus dem Formhohlraum entfernt werden muss.

Die Bedampfungszeiten im Schritt c) zum Erhitzen des Granulats, ggf. Expandieren desselben und Verschmelzen zu einem Formteil können nach dem erfindungsgemäßen Verfahren extrem kurz ausfallen, da lediglich die Energie zum Plastifizieren der Partikel des herzustellenden Formteils und zum Erwärmen des Hohlraumes zwischen den einzelnen Partikeln durch Einbringen des Wasserdampfes in den gefüllten Formhohlraum aufgebracht werden muss, sodass nahezu keine Kondensatbildung erfolgt und insoweit Formteile mit hervorragenden Oberflächen erzeugt werden.

Aufgrund der nur geringen benötigten Dampfmengen in den Dampfkammern, die zum Erhitzen des Granulats in den Formhohlraum eingebracht werden müssen, können auch die Dampfkammern selbst entsprechend kompakt ausgeführt werden, sodass die Abmessungen der im Rahmen des erfindungsgemäßen Verfahrens verwendeten Formwerkzeuges gegenüber dem Stand der Technik bedeutend verringert werden können.

Nach einem weiteren Vorschlag der Erfindung kann die Führung des Temperiermediums durch den Hohlraum auch beim Einfüllen des Granulats in Schritt c) und/oder beim Erhitzen des Granulats in Schritt d) aufrechterhalten werden.

Das Temperiermedium kann darüber hinaus zur weiteren Optimierung des Energie- und Wasserverbrauchs in einem geschlossenen Kreislauf durch den Hohlraum geführt werden.

Erfindungsgemäß wird nach dem Erhitzen in Schritt c) der gefüllte Formhohlraum mit Unterdruck beaufschlagt. Somit wird bereits unmittelbar nach dem Einbringen des Wasserdampfes in den gefüllten Formhohlraum zum Erhitzen des Granulats und Verschmelzen zum Formteil dieser Wasserdampf in möglichst kurzer Zeit nach der gewünschten Energieeinbringung in die im Formhohlraum befindlichen Partikel wieder aus dem Formhohlraum entfernt, um das erzeugte gesinterte Formteil unter Ausnutzung der innewohnenden Restwärme im Formteil sowie den Wänden des Formwerkzeuges zu stabilisieren. Zu diesem Zweck wird der Unterdruck bevorzugt bei einer Temperatur der Wände von mindestens 70°C, bei EPP vorzugsweise etwa 110 °C während einer vorbestimmten Zeitdauer aufrechterhalten, die zur Stabilisation der verschmolzenen Partikel im Formhohlraum erforderlich ist. Alternativ kann z.B. über eine Sonde, die in eine den Formhohlraum begrenzende Wandung eingesetzt ist, der Schaumdruck des gebildeten Formteiles gemessen werden. Sobald dieser Schaumdruck unter einen vorbestimmten Grenzwert fällt, kann auf den erfolgreichen Abschluss der Stabilisation der verschmolzenen Partikel im Formhohlraum geschlossen werden. Eventuell im Formhohlraum noch vorhandenes Kondensat wird außerdem durch den anliegenden Unterdruck wieder in die Dampfphase überführt und aus dem Formhohlraum über die Öffnungen in die Dampfkammern abgeleitet und von dort abgeführt.

Der Unterdruck kann beispielsweise mittels Unterdruckpumpen oder auch durch einen Vakuumtank, z.B. wie in der EP 2 227 366 A1 beschrieben, bereitgestellt werden.

Nach einem weiteren Vorschlag der Erfindung kann in Schritt d) sodann ein Kühlmedium durch den nicht mit den Dampfkammern und dem Formhohlraum kommunizierenden Hohlraum innerhalb der Wände des Formwerkzeuges geleitet werden, durch den im vorausgegangenen Vorwärmschritt der Wände auch das Temperiermedium geleitet worden ist. Auf diese Weise können die Wände rasch auf eine Entformungstemperatur abgekühlt werden, ohne dass das Formteil mit dem Kühlmedium in Kontakt kommt.

Nach einem weiteren Vorschlag der Erfindung kann auch während und oder nach der Durchleitung des Kühlmediums und der Abkühlung der Wände der Formhohlraum weiterhin mit Unterdruck beaufschlagt werden.

Auch das Kühlmedium kann nach einem weiteren Vorschlag der Erfindung in einem geschlossenen Kreislauf geführt werden.

Aufgrund der erfindungsgemäß vorgesehenen Vorwärmung der Wände des Formhohlraumes durch ein in einem Hohlraum der Wände geführtes Temperiermedium wird kein Kondensat in den auszubildenden Partikelschaum des Formteiles transportiert und die eingebrachte Energiemenge im Formteil ist so gering, dass nur eine reduzierte Schrumpfneigung des hergestellten Formteiles zu beobachten ist. Die Stabilisationszeiten im Formwerkzeug sind damit äußerst kurz und es kann gegebenenfalls sogar auf im Stand der Technik bislang unvermeidliche Temperzeiten verzichtet werden.

Da sowohl das Aufheizen der Wände des Formwerkzeuges wie auch das Kühlen derselben durch im abgeschlossenen Hohlraum der Wände geführte Temperier- bzw. Kühlmedien erfolgt, können einzelne Verfahrensschritte beim erfindungsgemäßen Verfahren parallel ablaufen, wodurch die Taktzeiten bedeutend verringert und enorme Energieeinsparungen möglich werden.

In einer weiteren Ausgestaltung des erfindungsgemäßen Verfahrens ist vorgesehen, vor, während und/oder nach dem Erhitzen des Granulats im Schritt c) und vor dem Abkühlen des Formteiles ein sehr heißes Temperiermedium mit einer rohstoffabhängigen Temperatur von etwa 150 bis 200 °C, vorzugsweise etwa 170 bis 180 °C, durch den Hohlraum zu leiten. Durch die sich einstellende starke Erwärmung der den Formhohlraum begrenzenden Wände kann auf dem Formteil eine geschlossene Kunststoffhaut ausgebildet werden, was in bestimmten Anwendungsfällen besonders wünschenswert ist. Der aufgeschmolzene Volumenanteil des Granulats wird durch einen zweiten Füllprozess oder die Komprimierung des Bauteils durch das sog. "Verdichten im Spalt" kompensiert.

Das erfindungsgemäße Verfahren wird mit Formwerkzeugen durchgeführt, die Hohlräume oder Kanäle in den den Formhohlraum begrenzenden Wänden aufweisen, durch die das Temperiermedium und gegebenenfalls auch das Kühlmedium geleitet werden können, ohne dass es zu einem Kontakt oder Übertritt in den Formhohlraum und die Dampfkammer kommt. Erfindungsgemäβ werden Formwerkzeuge verwendet die in einem additiven Verfahren aus metallischen Werkstoffen hergestellt werden, zum Beispiel mittels selektivem Laserschweißen. Mit diesem Verfahren können Wände des Formwerkzeuges hergestellt werden, die zwischen den an den Formhohlraum einerseits und die Dampfkammer andererseits angrenzenden Oberflächen einen idealerweise zusammenhängenden Hohlraum aufweisen, wobei die die Dampfkammer und den Formhohlraum verbindenden Öffnungen für die Dampfeinleitung und Abführung desselben als gegenüber dem Hohlraum abgegrenzte rohrförmige Abschnitte ausgebildet werden, die den Hohlraum durchsetzen. Aufgrund der Herstellung in einem additiven Verfahren sind die den Hohlraum begrenzenden Oberflächen sowie die darin angeordneten Öffnungen integral aus dem metallischen Werkstoff hergestellt, wobei die Anordnung und der Verlauf der Öffnungen nach Maßgabe des herzustellenden Formteiles weitgehend frei gewählt werden können. Die Formwerkzeuge werden mit geeigneten Anschlussstutzen für die Durchleitung des Temperiermediums sowie gegebenenfalls des Kühlmediums durch den Hohlraum ausgerüstet.

Weitere Ausgestaltungen und Einzelheiten der Erfindung werden nachfolgend anhand der ein Ausführungsbeispiel darstellenden Zeichnung erläutert. Es zeigen:
- Figur 1: ein Schnitt durch einen Teilbereich eines Formwerkzeugs;
- Figuren 2 bis 6: in einer stark vereinfachten, teilgeschnittenen Seitenansicht durch das Formwerkzeug den Ablauf des erfindungsgemäßen Verfahrens in aufeinanderfolgenden Schritten zur Herstellung eines Formteiles.

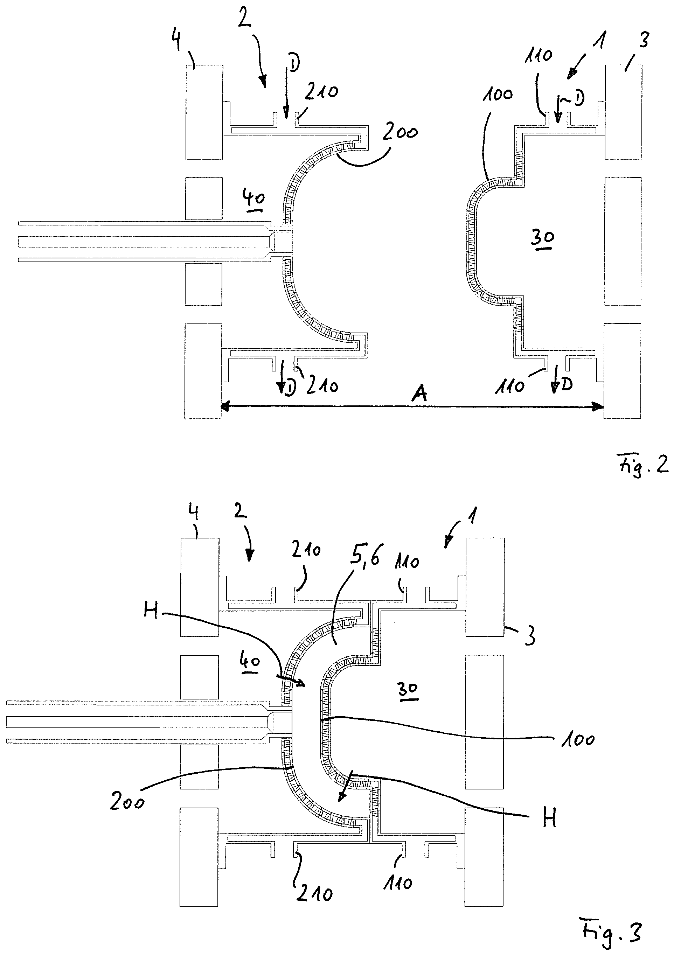

Aus den Figuren 2 bis 6 ist in einer sequenziellen Abfolge die Herstellung eines Formteiles 6 in einem zweiteiligen Formwerkzeug mit einem ersten Formwerkzeugoberteil 1 und einem zugeordneten zweiten Formwerkzeugunterteil 2 dargestellt, die jeweils an Trägerplatten 3, 4 eines nicht näher dargestellten Formteilautomaten, z.B. in Monoblockbauweise befestigt sind.

Mittels nicht näher dargestellter Antriebe sind die Formwerkzeuge 1, 2 in den aus der Figur 2 ersichtlichen Öffnungszustand verfahrbar und unter Verringerung des Abstandes A in einen Schließzustand gemäß Figur 2 verfahrbar, was nachfolgend noch näher erläutert wird.

Die beiden Formwerkzeuge 1, 2 weisen eine nach Maßgabe des herzustellenden Formteiles ausgeführte Kontur der Formwerkzeugwand 100, 200 auf, die im geschlossenen Zustand gemäß Figur 2 einen Formhohlraum 5 begrenzen, in welchem in der nachfolgend noch erläuterten Weise das Formteil 6 hergestellt wird.

Auf der jeweiligen, dem Formhohlraum 5 gegenüberliegenden Seite der Wand 100, 200 wird jeweils zwischen der Aufnahmeplatte 3, 4 und dem daran befestigten Formwerkzeug 1, 2 eine Dampfkammer 30, 40 begrenzt, die in nicht näher dargestellter Weise mit Anschlussöffnungen für die Zu- und Abführung von Wasserdampf bzw. die Beaufschlagung mit Unterdruck ausgerüstet sind.

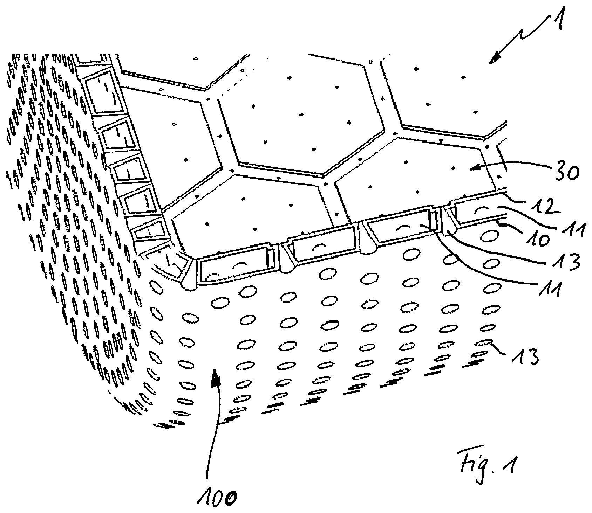

Wesentliches Merkmal der beiden Formwerkzeuge 1, 2 ist es, dass sie in einem additiven Verfahren aus einem metallischen Werkstoff, wie rostfreiem Edelstahl (V4A) zum Beispiel mittels selektivem Laserschweißen hergestellt sind und den aus der Figur 1 ersichtlichen Aufbau aufweisen.

Am Beispiel des das Oberteil bildenden Formwerkzeugs 1 erkennt man eine Hohlstruktur der Wand 100, die gleichermaßen auch in der Wand 200 des das Unterteil bildenden Formwerkzeuges 2 ausgebildet ist, sodass die nachfolgenden Erläuterungen gleichermaßen auch für das Formwerkzeug 2 gelten.

Demnach wird die Wand 100 von einer dem Formhohlraum 5 zugewandten und diesen begrenzenden Oberfläche 10 sowie einer an die Dampfkammer 30 angrenzenden und von der Oberfläche 10 beanstandeten zweiten Oberfläche 12 begrenzt, zwischen denen ein zusammenhängender Hohlraum 11 ausgebildet ist, welcher von rohrförmigen bzw. säulenförmigen Öffnungen 13 durchsetzt ist, die von der Oberfläche 12 bis zur Oberfläche 10 verlaufen und sich in Richtung der Oberfläche 10 mit kreisförmigen Querschnitt trichterförmig bzw. konisch erweitern. Die Öffnungen 13 sind somit gegenüber dem Hohlraum 11 abgegrenzt, ermöglichen aber den Stoffdurchtritt zwischen der Dampfkammer 30 und dem an die Oberfläche 10 anschließenden Formhohlraum 5. Die Querschnittsgestaltung der Wände 100, 200 mit zwei voneinander beabstandeten Oberflächen 10, 12 mit einem dazwischenliegenden Hohlraum 11 und den Hohlraum 11 durchsetzenden rohrförmigen Öffnungen 13 bewirkt einen extrem leichten und biegesteifen Aufbau der Formwerkzeuge 1, 2.

Andererseits ist der Hohlraum 11 im Formwerkzeug 1 als zusätzliche Funktionsebene mit mindestens zwei Anschlussstutzen 110 versehen, sodass durch den Hohlraum 11 ein Medium über die Anschlussstutzen 110 geleitet werden kann, ohne dass es aus dem Hohlraum 11 in die Dampfkammer 30 oder den Formhohlraum 5 gelangen kann, da die Öffnungen 13 gegenüber dem Hohlraum 11 abgeteilt bzw. abgeschottet sind.

Gleiches gilt auch für den Aufbau der Wandung 200 im Formwerkzeug 2, wobei die Anschlussstutzen mit Bezugszeichen 210 bezeichnet sind.

Zur Herstellung eines Formteiles aus einem geschäumten Kunststoff innerhalb des Formhohlraumes 5 wird ausgehend vom Öffnungszustand in der Figur 2 in einem ersten Schritt bei noch geöffnetem Formwerkzeug 1, 2 ein Temperiermedium, beispielsweise Wasserdampf einer Temperatur von etwa 130 °C bei einem geregelten Druck von ca. 3 bar gemäß Pfeilen D über die Anschlussstutzen 110, 210 durch die Hohlräume 11 in den Wänden 100, 200 der Formwerkzeuge 1, 2 geleitet, um die Formwerkzeuge 1, 2 im Bereich ihrer Wände 100, 200 und der diese Wände begrenzenden Oberflächen 10, 12 auf die für die Verschmelzung des partikelförmigen Granulats aus Kunststoff zu einem Formteil vorzuwärmen, beispielsweise auf eine Temperatur größer oder gleich 120 °C.

Aufgrund der Führung des Temperiermediums, hier Wasserdampf, durch den innerhalb der Wände 100, 200 ausgebildeten Hohlraum 11 wird eine homogene Vorwärmung der Wände 100, 200 erreicht, ohne dass Dampf in die Dampfkammer 30 oder den Formhohlraum 5 oder auf die diese begrenzenden Oberflächen 10, 12 gelangen kann und zu Kondensat ausfällt.

Gleichzeitig mit der Vorwärmung der Wände 100, 200 werden die Formwerkzeuge 1, 2 mitsamt der zugeordneten Trägerplatten 3, 4 durch Verringerung ihres Abstandes A aufeinander zu bewegt, bis sie die Schließstellung gemäß Figur 3 erreichen, in welcher sie ineinandergreifen und den geschlossenen Formhohlraum 5 zwischen sich begrenzen.

Die Vorwärmung der Wände 100, 200 kann während des gesamten Schließvorganges aufrechterhalten werden, woraus eine erhebliche Zeitersparnis resultiert.

Sobald der Formhohlraum 5 zwischen den beiden Formwerkzeugen 1, 2 ausgebildet ist, wird über entsprechende Füllöffnungen in den Wänden 100, 200 partikelförmiges Granulat des Kunststoffes in den Formhohlraum 5 eingefüllt, wobei gegebenenfalls die Vorwärmung der Wände 100, 200 durch das in den Hohlräumen 11 geführte Temperiermedium noch weiter aufrechterhalten werden kann.

Sobald die Befüllung des Formhohlraumes 5 mit dem Granulat abgeschlossen ist, wird in nicht näher dargestellter, aber an sich bekannter Weise Wasserdampf in die Dampfkammer 30, 40 eingeleitet und tritt von dort gemäß Pfeilen H in Figur 3 über die in den Wänden 100, 200 ausgebildeten Öffnungen 13 in den Formhohlraum 5 über. Der heiße Wasserdampf trifft dort auf die eingefüllten Partikel des Granulats und erwärmt deren Oberflächen sowie die zwischen den Partikeln befindliche Luft, sodass die Partikel zu einem zusammenhängenden Formteil 6 nach Maßgabe der Kontur des Formhohlraumes 5 verschmolzen werden. Infolge des kreisförmigen, sich konisch erweiternden Querschnittes der Öffnungen 13 in Richtung des Formhohlraumes 5 unterliegen diese einem Selbstreinigungseffekt.

Da in der vorangehend geschilderten Weise bereits vor der Einleitung des Wasserdampfes aus den Dampfkammer 30, 40 in den Formhohlraum 5 die Wände 100, 200 des Formwerkzeuge 1, 2 auf die erforderlichen Temperaturen vorgewärmt worden sind, können die Bedampfungszeiten, d. h. das Zeitintervall, in welchem Dampf aus den Dampfkammer 30, 40 in den Formhohlraum 5 gemäß Pfeilen H eingeleitet werden muss, um die Partikel des Granulats zu dem Formteil 6 zu verschmelzen, extrem kurz bemessen werden, da nur diejenige Energiemenge über den Wasserdampf aus den Dampfkammern 30, 40 in den Formhohlraum 5 eingebracht werden muss, die zum Verschmelzen und ggf. zum Aufschäumen der eingefüllten Partikel erforderlich ist. Aufgrund der insoweit nur geringen Menge an Wasserdampf, die in den Formhohlraum 5 eingeleitet wird, fällt in diesem auch nahezu kein Kondensat an, welches die Oberflächen des Formteiles 6 negativ beeinflussen könnte. Die hergestellten Formteile 6 weisen von daher herausragende Oberflächeneigenschaften auf. Darüber hinaus kann das Volumen der Dampfkammer 30, 40 sehr gering bemessen werden, sodass das Formwerkzeug 1, 2 sehr kompakt gestaltet werden kann, was neben verringertem Platzbedarf auch zu einer bedeutenden Verringerung der zu beheizenden Masse führt. Konkret kann somit im Vergleich zu einem konventionellen Werkzeug die beheizte Masse um bis zu 95 % und das Dampfkammervolumen ebenfalls um bis zu 95 % reduziert werden.

Unmittelbar im Anschluss an die Einleitung der benötigten Menge an Wasserdampf aus den Dampfkammer 30, 40 in den Formhohlraum 5 gemäß Pfeilen H in Figur 3 wird die Dampfkammer 30, 40 mit einem Unterdruck bzw. Vakuum beaufschlagt, sodass der im Formhohlraum 5 befindliche Wasserdampf in entgegengesetzter Richtung aus dem Formhohlraum 5 über die Öffnungen 13 durch die Wände 100, 200 hindurch in die Dampfkammer 30, 40 zurückgeführt und von dort in nicht näher dargestellter Weise abgeführt wird.

Aufgrund der Beaufschlagung der Dampfkammer 30, 40 mit Unterdruck bzw. Vakuum sinkt auch der Druck im Formhohlraum 5 entsprechend ab und eventuell im Formhohlraum 5 und/oder dem Formteil 6 ausgefallenes Kondensat wird infolge der im Formteil 6 und den Wänden 100, 200 des Formwerkzeuges 1, 2 innewohnenden Restwärme unmittelbar wieder in die Dampfphase überführt und gleichermaßen über die Dampfkammer 30, 40 abgeführt.

Die Beaufschlagung der Dampfkammer 30, 40 mit Unterdruck bzw. Vakuum wird über einen vorbestimmten Zeitraum und/oder bis zum Absinken des Schaumdruckes unter einen vorbestimmten Grenzwert aufrechterhalten, sodass das Formteil 6 im Formhohlraum 5 getrocknet und unter Ausnutzung der Restwärme ausschließlich mit dem anliegenden Unterdruck stabilisiert wird.

Kurz vor dem Entformen des im Formhohlraum 5 befindlichen Formteiles 6 wird dann, gegebenenfalls unter weiterer Aufrechterhaltung des Unterdrucks in den Dampfkammern 30, 40, ein Kühlmedium, zum Beispiel Wasser, über die Anschlussöffnungen 110, 210 durch den Hohlraum 11 in den Wandungen 100, 200 geleitet, um das Formwerkzeug 1, 2 sowie das darin befindliche Formteil 6 auf die Entformungstemperatur abzukühlen. Hierdurch wird eine besonders hochwertige Oberfläche des Formteiles 6 erzielt.

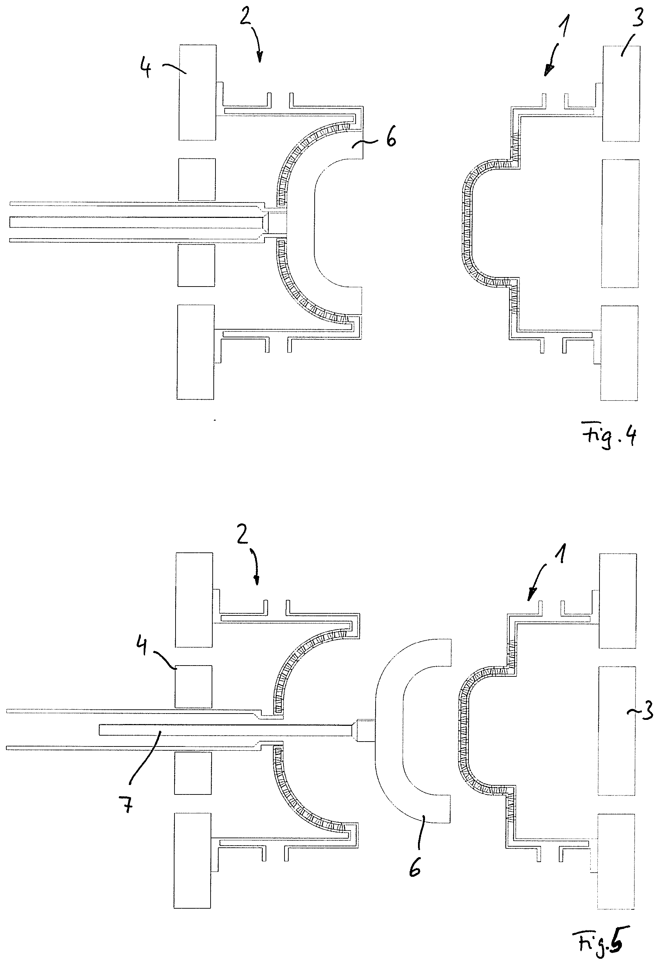

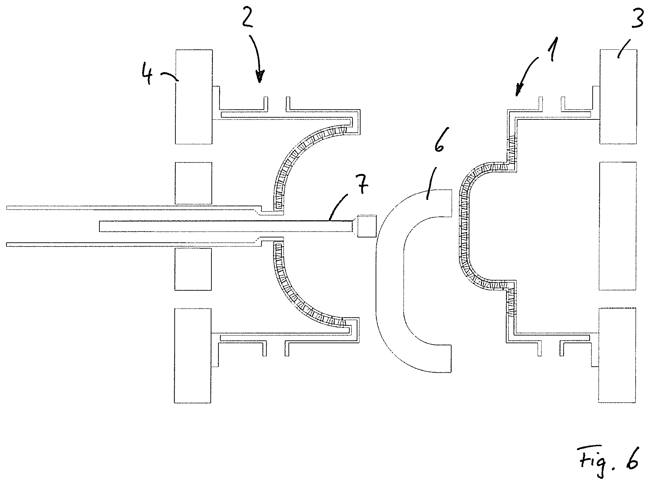

Anschließend kann, wie in Figur 4 dargestellt, das Formwerkzeug geöffnet werden, indem die Trägerplatten 3, 4 mit den daran befestigten Formwerkzeugen 1, 2 auseinandergefahren und der Formhohlraum 5 geöffnet wird. Das fertige Formteil 6 kann mittels eines Ausstoßers gemäß Figur 5 entnommen werden und fällt aus dem Werkzeug (Figur 6). Der Vorgang kann dann bei Figur 2 von neuem beginnen.

Das innerhalb des Hohlraumes 11 in den Wänden 100, 200 geführte Temperiermedium zum Vorwärmen der Wände 100, 200 und das innerhalb des Hohlraumes 11 geführte Kühlmedium werden vorzugsweise in geschlossenen Kreisläufen geführt, sodass die benötigten Mengen an Temperier- und Kühlmedium gering gehalten und die benötigte Energie zum Aufheizen bzw. Kühlen dieser Medien minimiert wird.

Da aufgrund der Führung des Temperiermediums und/oder des Kühlmediums in der dritten Temperierebene des Formwerkzeuges 1, 2 im abgeschlossenen Hohlraum 11 ein Übertritt in die Dampfkammer 30, 40 und/oder den Formhohlraum 5 ausgeschlossen ist, können die vorangehend erläuterten Verfahrensschritte in kurzer zeitlicher Aufeinanderfolge und teilweise sogar gleichzeitig ablaufen, sodass die Taktzeiten des gesamten Verfahrensablaufs von Figur 2 bis Figur 5 extrem kurz werden.

## Patentansprüche

1. Verfahren zum Herstellen eines Formteiles (6) aus einem geschäumten Kunststoff in einem von Wänden (100, 200) entlang einer Oberfläche derselben begrenzten Formhohlraum (5) eines mindestens zweiteiligen öffen- und schließbaren Formwerkzeuges (1, 2), umfassend die Schritte:
a. Schließen des Formwerkzeuges (1, 2) zur Bereitstellung des Formhohlraumes (5);
b. Einfüllen eines partikelförmigen Granulats des Kunststoffes in den Formhohlraum (5);
c. Erhitzen des Granulats durch Einbringen von Wasserdampf in den gefüllten Formhohlraum (5) mit einer solchen Temperatur und einem solchen Dampfdruck, dass das Granulat zu einem Formteil (6) verschmolzen wird;
d. Abkühlen des Formteils (6) in dem Formhohlraum (5);
e. Öffnen des Formwerkzeuges (1, 2) und Entnehmen des Formteils (6),
wobei der in den Formhohlraum (5) eingebrachte Wasserdampf durch Dampfkammern (30, 40) geleitet wird, die an der dem Formhohlraum (5) gegenüberliegenden Oberfläche der Wände (100, 200) des Formwerkzeuges (1, 2) angeordnet sind und über die Wände (100, 200) durchsetzende Öffnungen (13) mit dem Formhohlraum (5) kommunizieren, **dadurch gekennzeichnet, dass** Formwerkzeuge (1,2) mit in einem additiven Verfahren hergestellten Wänden (100, 200) und einem innerhalb der Wände (100, 200) verlaufenden Hohlraum (11) verwendet werden, wobei die Öffnungen (13) als gegenüber dem Hohlraum (11) abgegrenzte rohrförmige Abschnitte zwischen den Oberflächen der Wände (100, 200) den Hohlraum (11) durchsetzen und die Wände (100, 200) mit dem zwischen diesen ausgebildeten Hohlraum (11) und den diesen durchsetzenden Öffnungen (13) integral aus einem metallischen Werkstoff ausgebildet sind und vor und/oder während des Schließens des Formwerkzeuges (1, 2) innerhalb der Wände (100, 200) des Formwerkzeuges (1, 2) ein Temperiermedium in dem nicht mit den Dampfkammern (30, 40) und dem Formhohlraum (5) kommunizierenden Hohlraum (11) in den Wänden (100, 200) zum Vorwärmen der Wände (100, 200) geführt wird und die Wände (100, 200) des Formwerkzeuges auf eine für das Verschmelzen des Granulats zu dem Formteil (6) geeignete Temperatur vorgewärmt werden, wobei ferner nach dem Erhitzen im Schritt c) der gefüllte Formhohlraum (5) mit einem Unterdruck beaufschlagt wird.

2. Verfahren nach Anspruch 1, **dadurch gekennzeichnet, dass** die Wände (100, 200) auf eine Temperatur von etwa 100 °C bis 200° C vorgewärmt werden.

3. Verfahren nach Anspruch 1 oder 2, **dadurch gekennzeichnet, dass** als Temperiermedium Wasserdampf, Wasser oder Öl verwendet wird.

4. Verfahren nach einem der Ansprüche 1 bis 3, **dadurch gekennzeichnet, dass** die Führung des Temperiermediums durch den Hohlraum (11) auch beim Einfüllen des Granulats in Schritt b) aufrechterhalten wird.

5. Verfahren nach einem der Ansprüche 1 bis 4, **dadurch gekennzeichnet, dass** das Temperiermedium in einem geschlossenen Kreislauf durch den Hohlraum (11) geführt wird.

6. Verfahren nach einem der Ansprüche 1 bis 5, **dadurch gekennzeichnet, dass** das Beaufschlagen des gefüllten Formhohlraumes (5) mit Unterdruck bei einer Temperatur der Wände (100, 200) über 70 °C während einer solchen vorbestimmten Zeitdauer erfolgt, dass das verschmolzene Granulat im Formhohlraum (5) stabilisiert wird.

7. Verfahren nach einem der Ansprüche 1 bis 6, **dadurch gekennzeichnet, dass** zum Abkühlen des Formteiles (6) im Formhohlraum (5) des Formwerkzeuges (1, 2) in Schritt d) ein Kühlmedium durch den nicht mit den Dampfkammern (30, 40) kommunizierenden Hohlraum (11) innerhalb der Wände (100, 200) des Formwerkzeuges (1, 2) geleitet wird, um die Wände (100, 200) auf eine Entformungstemperatur abzukühlen.

8. Verfahren nach Anspruch 7, **dadurch gekennzeichnet, dass** während und/oder nach der Durchleitung des Kühlmediums und Abkühlung der Wände (100, 200) der Formhohlraum (5) weiterhin mit Unterdruck beaufschlagt wird.

9. Verfahren nach einem der Ansprüche 7 oder 8, **dadurch gekennzeichnet, dass** das Kühlmedium in einem geschlossenen Kreislauf durch den Hohlraum (11) geführt wird.

10. Verfahren nach einem der Ansprüche 1 bis 9, **dadurch gekennzeichnet, dass** während und/oder nach dem Erhitzen des Granulats im Schritt c) und vor dem Abkühlen des Formteiles im Schritt d) ein heißes Temperiermedium mit einer Temperatur von etwa 150 bis 200 °C, vorzugsweise etwa 170 bis 180 °C, durch den Hohlraum (11) geleitet wird.

## Claims

1. Method for producing a molded part (6) from a foamed plastic in a mold cavity (5) of an at least two-part molding tool (1, 2) that can be opened and closed, which mold cavity is delimited by walls (100, 200) along a surface thereof, comprising the steps:
a. closing the molding tool (1, 2) to provide the mold cavity (5);
b. filling the mold cavity (5) with a particulate granulate of the plastic;
c. heating the granulate by introducing water vapor into the filled mold cavity (5) at such a temperature and such a vapor pressure that the granulate is melted to form a molded part (6);
d. cooling the molded part (6) in the mold cavity (5);
e. opening the molding tool (1, 2) and removing the molded part (6),
wherein the water vapor introduced into the mold cavity (5) is passed through vapor chambers (30, 40) which are arranged on the surface of the walls (100, 200) of the molding tool (1, 2) opposite the mold cavity (5) and communicate with the mold cavity (5) via openings (13) passing through the walls (100, 200), **characterized in that** molding tools (1, 2) with walls (100, 200) produced in an additive method and a cavity (11) extending inside the walls (100, 200) are used, wherein the openings (13) pass through the cavity (11) as tubular sections delimited from the cavity (11) between the surfaces of the walls (100, 200), and the walls (100, 200) with the cavity (11) formed in between and the openings (13) passing through them are integrally formed from a metallic material and, before and/or during the closing of the molding tool (1, 2), inside the walls (100, 200) of the molding tool (1, 2), a temperature control medium is introduced into the cavity (11) in the walls (100, 200), which does not communicate with the vapor chambers (30, 40) and the mold cavity (5), in order to preheat the walls (100, 200), and the walls (100, 200) of the molding tool are preheated to a temperature suitable for melting the granulate into the molded part (6), wherein, after the heating in step c), the filled mold cavity (5) is subjected to negative pressure.

2. Method according to claim 1, **characterized in that** the walls (100, 200) are preheated to a temperature of approximately 100 °C to 200 °C.

3. Method according to claim 1 or 2, **characterized in that** water vapor, water or oil is used as the temperature control medium.

4. Method according to any one of claims 1 to 3, **characterized in that** the flow of the temperature control medium through the cavity (11) is maintained even when the granulate is being filled in step b).

5. Method according to any one of claims 1 to 4, **characterized in that** the temperature control medium is guided through the cavity (11) in a closed circuit.

6. Method according to any one of claims 1 to 5, **characterized in that** the filled mold cavity (5) is subjected to negative pressure at a temperature of the walls (100, 200) of above 70 °C for a predetermined period of time such that the molten granulate in the mold cavity (5) is stabilized.

7. Method according to any one of claims 1 to 6, **characterized in that** in order to cool the molded part (6) in the mold cavity (5) of the molding tool (1, 2) in step d) a cooling medium is passed through the cavity (11) inside the walls (100, 200) of the molding tool (1, 2), which cavity does not communicate with the vapor chambers (30, 40), in order to cool the walls (100, 200) to a demolding temperature.

8. Method according to claim 7, **characterized in that** during and/or after the passage of the cooling medium and cooling of the walls (100, 200), the mold cavity (5) continues to be subjected to negative pressure.

9. Method according to any one of claims 7 or 8, **characterized in that** the cooling medium is passed through the cavity (11) in a closed circuit.

10. Method according to any one of claims 1 to 9, **characterized in that** during and/or after heating the granulate in step c) and before cooling the molded part in step d), a hot temperature control medium with a temperature of approximately 150 to 200 °C, preferably approximately 170 to 180 °C, is passed through the cavity (11).

## Revendications

1. Procédé de fabrication d'une pièce moulée (6) en une matière plastique expansée dans un espace creux de moule (5) délimité par des parois (100, 200) le long d'une surface de celles-ci d'un outil de moulage (1, 2) ouvrable et refermable au moins en deux parties, comprenant les étapes suivantes :
a. la fermeture de l'outil de moulage (1, 2) pour la fourniture de l'espace creux de moule (5) ;
b. le versement d'un granulat particulaire de matière plastique dans l'espace creux de moule (5) ;
c. le chauffage du granulat par introduction de vapeur d'eau dans l'espace creux de moule (5) rempli à une telle température et une telle pression de vapeur que le granulat soit fondu en une pièce moulée (6) ;
d. le refroidissement de la pièce moulée (6) dans l'espace creux de moule (5) ;
e. l'ouverture de l'outil de moulage (1, 2) et le retrait de la pièce moulée (6),
dans lequel la vapeur d'eau introduite dans l'espace creux de moule (5) est conduite à travers des chambres de vapeur (30, 40) qui sont agencées au niveau de la surface opposée à l'espace creux de moule (5) des parois (100, 200) de l'outil de moulage (1, 2) et communiquent par l'intermédiaire d'ouvertures (13) traversant les parois (100, 200) avec l'espace creux de moule (5), **caractérisé en** ceque des outils de moulage (1, 2) sont utilisés avec des parois (100, 200) fabriquées dans un procédé additif et un espace creux (11) s'étendant à l'intérieur des parois (100, 200), dans lequel les ouvertures (13) traversent l'espace creux (11) comme sections annulaires délimitées par rapport à l'espace creux (11) entre les surfaces des parois (100, 200) et les parois (100, 200) sont formées d'un seul tenant en un matériau métallique avec l'espace creux (11) formé entre elles et les ouvertures (13) le traversant et avant et/ou pendant la fermeture de l'outil de moulage (1, 2) à l'intérieur des parois (100, 200) de l'outil de moulage (1, 2), un fluide de mise en température est guidé dans l'espace creux (11) ne communiquant pas avec les chambres de vapeur (30, 40) et l'espace creux de moule (5) dans les parois (100, 200) pour le préchauffage des parois (100, 200) et les parois (100, 200) de l'outil de moulage sont préchauffées à une température appropriée à la fonte du granulat en pièce moulée (6), dans lequel l'espace creux de moule (5) rempli est de plus alimenté en une dépression après le chauffage à l'étape c).

2. Procédé selon la revendication 1, **caractérisé en ce que** les parois (100, 200) sont préchauffées à une température d'environ 100 °C à 200 °C.

3. Procédé selon la revendication 1 ou 2, **caractérisé en** ceque de la vapeur d'eau, de l'eau ou de l'huile est utilisée comme fluide de mise en température.

4. Procédé selon l'une quelconque des revendications 1 à 3, **caractérisé en** ceque le guidage du fluide de mise en température à travers l'espace creux (11) est aussi maintenu lors du versement du granulat à l'étape b).

5. Procédé selon l'une quelconque des revendications 1 à 4, **caractérisé en ceque** le fluide de mise en température est guidé dans un circuit fermé à travers l'espace creux (11).

6. Procédé selon l'une quelconque des revendications 1 à 5, **caractérisé en** ceque l'alimentation en dépression de l'espace creux de moule (5) rempli est effectuée à une température des parois (100, 200) supérieure à 70 °C pendant une telle durée prédéterminée que le granulat fondu est stabilisé dans l'espace creux de moule (5).

7. Procédé selon l'une quelconque des revendications 1 à 6, **caractérisé en ceque** pour le refroidissement de la pièce moulée (6) dans l'espace creux de moule (5) de l'outil de moulage (1, 2) à l'étape d), un agent de refroidissement est conduit à travers l'espace creux (11) ne communiquant avec les chambres de vapeur (30, 40) à l'intérieur des parois (100, 200) de l'outil de moulage (1, 2) afin de refroidir les parois (100, 200) à une température de démoulage.

8. Procédé selon la revendication 7, **caractérisé en ce**que pendant et/ou après la conduite de l'agent de refroidissement et le refroidissement des parois (100, 200), l'espace creux de moule (5) est en outre alimenté en dépression.

9. Procédé selon l'une quelconque des revendications 7 ou 8, **caractérisé en ce**que l'agent de refroidissement est guidé dans un circuit fermé à travers l'espace creux (11).

10. Procédé selon l'une quelconque des revendications 1 à 9, **caractérisé en ce**que pendant et/ou après le chauffage du granulat à l'étape c) et avant le refroidissement de la pièce moulée à l'étape d), un fluide de mise en température chaud est conduit à une température d'environ 150 à 200 °C, de préférence environ 170 à 180 °C, à travers l'espace creux (11).
